(19) Europäisches Patentamt / European Patent Office / Office européen des brevets

(11) **EP 4 529 280 A1**

(12) **EUROPEAN PATENT APPLICATION**
published in accordance with Art. 153(4) EPC

(43) Date of publication:
26.03.2025 Bulletin 2025/13

(21) Application number: 23822935.5

(22) Date of filing: 31.05.2023

(51) International Patent Classification (IPC):
*H04W 40/24* (2009.01)

(52) Cooperative Patent Classification (CPC):
H04B 7/185; H04W 40/24

(86) International application number:
PCT/CN2023/097607

(87) International publication number:
WO 2023/241365 (21.12.2023 Gazette 2023/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.06.2022 CN 202210674591

(71) Applicant: Huawei Technologies Co., Ltd.
Shenzhen, Guangdong 518129 (CN)

(72) Inventors:
• MENG, Xian
  Shenzhen, Guangdong 518129 (CN)
• LUO, Hejia
  Shenzhen, Guangdong 518129 (CN)

(74) Representative: Isarpatent
Patent- und Rechtsanwälte
Barth Hassa Peckmann & Partner mbB
Friedrichstraße 31
80801 München (DE)

(54) **SATELLITE NETWORK ROUTING METHOD, AND COMMUNICATION APPARATUS**

(57) This application relates to the field of communication technologies, and provides a satellite network routing method and a communication apparatus. A first satellite obtains a destination address of a ground device, where the destination address is determined based on a ground projected track of a current access satellite of the ground device, the current access satellite is a satellite on a ground co-track satellite chain, and the ground co-track satellite chain includes a plurality of satellites that have a same ground projected track; and the first satellite sends data to the ground device based on a first satellite parameter and the destination address, where the first satellite parameter includes at least one of the following: an address of the first satellite, information about an inter-satellite link of the first satellite, and whether the first satellite directly communicates with the ground device. **In** this manner, during routing, route and addressing is performed based on the ground projected track of the current access satellite, and the data is sent to the ground device based on the satellite parameter and the routing and addressing, so that routing efficiency can be improved, and a data storage amount of the satellite can be reduced. In addition, the first satellite parameter is flexible, and a routing path can be flexibly adjusted.

FIG. 6

**Description**

**CROSS-REFERENCE TO RELATED APPLICATIONS**

This application claims priority to Chinese Patent Application No. 202210674591.5, filed with the China National Intellectual Property Administration on June 14, 2022 and entitled "SATELLITE NETWORK ROUTING METHOD AND COMMUNICATION APPARATUS", which is incorporated herein by reference in its entirety.

**TECHNICAL FIELD**

Embodiments of this application relate to the field of communication technologies, and in particular, to a satellite network routing method and a communication apparatus.

**BACKGROUND**

Currently, 5th generation (5th generation, 5G) new radio (new radio, NR) has entered a commercial deployment phase from a standardization phase. An NR standard is researched and designed for a characteristic of terrestrial communication, and has characteristics of providing high-rate, high-reliability, and low-latency communication for a user terminal. Compared with terrestrial communication, non-terrestrial network (non-terrestrial network, NTN) communication has characteristics such as large coverage and flexible networking. Currently, research institutes, communication organizations, companies, and the like have participated in researching NTN communication technologies and standards, aiming to build an integrated communication network for space-air-ground communication.

In NTN communication, a large quantity of satellites may be deployed in space, and different satellites cover different areas or a same area. Data transmission between a satellite and a terminal may need to be implemented through forwarding by a plurality of satellites and a plurality of network devices. Therefore, a data forwarding path needs to be known. In a related technology, when a data forwarding path is determined, an orbital periodicity of a satellite is divided into several time slices based on a periodic characteristic of satellite running and satellite ephemeris prediction, and a constellation topology snapshot of the satellite in each time slice is considered as fixed. A device (a network device, a ground station, a terminal, or the like) on the ground calculates a routing table based on the constellation topology snapshot and a routing algorithm, and uploads the routing table to the satellite. The satellite loads a next routing table at a start moment of a next time slice, and forwards data based on a data forwarding path in the routing table.

However, as a quantity of satellites in a constellation continuously increases, each satellite needs to store a large quantity of routing tables. A storage amount of the satellite is limited, and continuously uploading the routing tables also consumes a large quantity of signaling resources. In addition, the satellite keeps moving, and a constellation topology of the satellite changes accordingly. However, the routing table is calculated offline after a constellation topology snapshot is obtained. Actually, after the constellation topology snapshot changes, the calculated routing table cannot be flexibly adjusted. In addition, during data transmission switching between the time slices, if data transmission in one time slice is not completed and is directly switched to another time slice, a problem of data transmission interruption and rerouting may occur.

**SUMMARY**

This application provides a satellite network routing method and a communication apparatus, to improve routing efficiency.

According to a first aspect, this application provides a satellite network routing method. The method may be performed by a satellite. The satellite may be a geostationary satellite, a non-geostationary satellite, an artificial satellite, a low earth orbit satellite, a medium earth orbit satellite, a high earth orbit satellite, or the like. This is not specifically limited herein in this application.

A first satellite obtains a destination address of a ground device, where the destination address is determined based on a ground projected track of a current access satellite of the ground device, the current access satellite is a satellite on a ground co-track satellite chain, and the ground co-track satellite chain includes a plurality of satellites that have a same ground projected track; and the first satellite sends data to the ground device based on a first satellite parameter and the destination address, where the first satellite parameter includes at least one of the following: an address of the first satellite, information about an inter-satellite link of the first satellite, and whether the first satellite directly communicates with the ground device.

In this application, in consideration of a property that the satellites in the ground co-track satellite chain have the same ground projected track, when the ground device is routed and addressed, the destination address of the ground device is determined based on the ground projected track of the current access satellite of the ground device. The routing and addressing in this manner can improve routing efficiency, and reduce a data storage capacity of the satellite. When sending data to the ground device, the first satellite may send the data based on the first satellite parameter and the destination address. Because the first satellite is not always in a static state, the first satellite parameter is flexibly changed. The first satellite sends the data based on the first satellite parameter and the destination address, so that a routing path can be flexibly adjusted.

In a possible manner, the destination address indicates a track point that is on the ground projected track of the current access satellite of the ground device and that is closest to the ground device or a point in a neighborhood range of the track point; or the destination address indicates a track segment that is on the ground projected track of the current access satellite of the ground device and that is closest to the ground device or a track segment in a neighborhood range of the track segment.

In this application, the destination address is indicated by using the track point or the track segment on the ground projected track of the current access satellite, so that the property that the satellites in the ground co-track satellite chain have the same ground projected track can be fully used. During routing and addressing, the routing efficiency can be ensured, and the destination address can remain unchanged for a long time. In this way, a routing table of the satellite does not need to be changed, so that routing complexity is reduced.

In a possible manner, the address of the first satellite indicates a track point of the first satellite on the ground projected track or a point in a neighborhood range of the track point; or the address of the first satellite indicates a track segment of the first satellite on the ground projected track or a track segment in a neighborhood range of the track segment.

In this application, the address of the first satellite is indicated by using the track point or the track segment of the first satellite on the ground projected track, so that the property that the satellites in the ground co-track satellite chain have the same ground projected track can be fully used. During routing and addressing, routing and addressing complexity is reduced, and routing and addressing efficiency is improved.

In a possible manner, the track point is indicated by using one of the following parameters:
a distance from a reference point moving along a first projected track to the track point, a satellite motion phase difference accumulated from the reference point moving along the first projected track to the track point, and a latitude difference accumulated from the reference point moving along the first projected track to the track point, where the reference point is any point on the first projected track, and the first projected track is a ground projected track of any ground co-track satellite chain.

It should be noted that the track point may be indicated by using a distance from the reference point to the track point. For example, the reference point is any point on a projected track 1, and a location 10 meters away from the reference point is the track point. In this case, the track point may be indicated by using 10 meters. The track point may be indicated by using a satellite motion phase difference accumulated from the reference point to the track point. For example, the reference point is any point on a projected track 1, a satellite ground projection is located at the reference point at a moment 1, and the satellite ground projection is located at the track point after X moments. In this case, the track point may be indicated by using a satellite motion phase difference accumulated from the moment 1 to a moment X+1. The track point may be indicated by using a latitude difference accumulated from the reference point to the track point. For example, the reference point is any point on a projected track 1, the reference point is located at latitude 1, and Y latitude needs to be passed from the reference point to the track point. In this case, the track point may be indicated by using the Y latitude. The track point may be indicated in a plurality of different manners by using the foregoing parameters.

In a possible manner, the first satellite directly communicates with the ground device, and the first satellite sends the data to the ground device through a satellite-to-ground link.

It should be noted that the satellite-to-ground link may be understood as a feeder link or a service link. The first satellite directly communicates with the ground device, and the first satellite directly sends the data to the ground device, without needing to determine the routing path.

In a possible manner, when the first satellite determines that the first satellite does not directly communicate with the ground device, and a distance between the first satellite and the destination address is the shortest or is less than a distance threshold, the first satellite sends the data to a satellite adjacent to the first satellite on the ground projected track, where the data is routed to the access satellite of the ground device in a route threshold range.

The data is routed to the access satellite of the ground device in the route threshold range, so that data packet flooding in a network can be reduced.

In a possible manner, a route threshold includes at least one of the following parameters: a route hop count threshold and a route path length threshold.

It should be noted that the route threshold is related to a route hop count or a route path length, so that the data packet flooding in the network can be reduced.

In a possible manner, when the first satellite determines that the first satellite does not directly communicate with the ground device, and a distance between the first satellite and the destination address is not the shortest or is greater than a distance threshold, the first satellite selects a next-hop satellite from the inter-satellite link according to a routing rule and the information about the inter-satellite link of the first satellite, where the routing rule includes: using a satellite that is on the inter-satellite link and that is closest to the destination address as the next-hop satellite; and sends the data to the next-hop satellite.

In this manner, dynamic routing of the satellite can be implemented, a routing path calculation amount can be reduced, and the routing efficiency can be improved.

In a possible manner, the first satellite receives a destination address change message, where the destination address change message is triggered based on a change of a track segment on the projected track of the current access satellite, or is triggered based on a change of the ground co-track satellite chain to which the current access satellite belongs.

It should be noted that the first satellite receives the destination address change message, so that the routing path can be flexibly adjusted, to ensure the data routing efficiency.

In a possible manner, the ground device is a terminal or a ground station.

In a possible manner, the address of the first satellite is determined based on at least one of the following parameters: a longitude and latitude location of the first satellite, an ephemeris of the first satellite, and a first satellite number of the first satellite.

In a possible manner, the first satellite receives the destination address of the ground device; when the first satellite is the current access satellite, the first satellite determines the destination address of the ground device through calculation based on a location of the ground device and the ground projected track of the first satellite; or the first satellite receives another address of the ground device, where there is a mapping relationship between the another address and the destination address.

In a possible manner, the satellites in the ground co-track satellite chain have a same inclination angle and are located on discrete orbits.

According to a second aspect, this application provides a satellite network routing method. The method may be performed by a ground device. The ground device may be understood as a terminal, a vehicle-mounted device, a chip of the terminal, a ground station, or the like. A type of the terminal is not specifically limited herein in this application.

The ground device determines a destination address of the ground device, where the destination address is determined based on a ground projected track of a current access satellite of the ground device, the current access satellite is a satellite on a ground co-track satellite chain, and the ground co-track satellite chain includes a plurality of satellites that have a same ground projected track; and the ground device sends the destination address.

In a possible manner, the destination address indicates a track point that is on the ground projected track of the current access satellite and that is closest to the ground device or a point in a neighborhood range of the track point; or the destination address indicates a track segment that is on the ground projected track of the current access satellite and that is closest to the ground device or a track segment in a neighborhood range of the track segment.

In a possible manner, the track point is indicated by using one of the following parameters:
a distance from a reference point moving along a first projected track to the track point, a satellite motion phase difference accumulated from the reference point moving along the first projected track to the track point, and a latitude difference accumulated from the reference point moving along the first projected track to the track point, where the reference point is any point on the first projected track, and the first projected track is a ground projected track of any ground co-track satellite chain.

In a possible manner, the ground device sends a destination address change message, where the destination address change message is triggered based on a change of a track segment on the projected track of the current access satellite, or is triggered based on a change of the ground co-track satellite chain to which the current access satellite belongs.

In a possible manner, the ground device is a terminal or a ground station.

In a possible manner, the satellites in the ground co-track satellite chain have a same inclination angle and are located on discrete orbits.

According to a third aspect, this application provides a satellite network routing method. The method may be implemented through interaction between a ground device and a satellite, and is performed as follows:

The ground device determines a destination address of the ground device, where the destination address is determined based on a ground projected track of a current access satellite of the ground device, the current access satellite is a satellite on a ground co-track satellite chain, and the ground co-track satellite chain includes a plurality of satellites that have a same ground projected track; and the ground device sends the destination address. A first satellite receives the destination address; and the first satellite sends data to the ground device based on a first satellite parameter and the destination address, where the first satellite parameter includes at least one of the following: an address of the first satellite, information about an inter-satellite link of the first satellite, and whether the first satellite directly communicates with the ground device.

According to a fourth aspect, an embodiment of this application provides a communication apparatus. The communication apparatus may be a communication apparatus on a first satellite (for example, the first satellite in the first aspect, the first satellite in the second aspect, or the first satellite in the third aspect) or a chip disposed inside the first satellite; or may be a ground device (for example, the ground device in the first aspect, the ground device in the second aspect, or the ground device in the third aspect) or a chip disposed inside the ground device. The communication apparatus has a function of implementing any one of the first aspect to the third aspect. For example, the communication apparatus includes a corresponding module, unit, or means (means) for performing steps in any one of the first aspect to the third aspect. The function, unit, or means may be implemented by using software, implemented by using hardware, or implemented by hardware executing corresponding software.

In a possible design, the communication apparatus includes a processing unit and a transceiver unit. The transceiver unit may be configured to send and receive a signal, to implement communication between the communication apparatus and another apparatus. For example, the transceiver unit is configured to receive a destination address of a ground device. The processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

When the communication apparatus is a communication apparatus or a chip in the first satellite, the transceiver unit is configured to obtain a destination address of a ground device, where the destination address is determined based on a ground projected track of a current access satellite of the ground device, the current access satellite is a satellite on a ground co-track satellite chain, and the ground co-track satellite chain includes a plurality of satellites that have a same ground projected track; and the processing unit is configured to send data to the ground device based on a first satellite parameter and the destination address, where the first satellite parameter includes at least one of the following: an address of the first satellite, information about an inter-satellite link of the first satellite, and whether the first satellite directly communicates with the ground device.

In a possible manner, the destination address indicates a track point that is on the ground projected track of the current access satellite and that is closest to the ground device or a point in a neighborhood range of the track point; or the destination address indicates a track segment that is on the ground projected track of the current access satellite and that is closest to the ground device or a track segment in a neighborhood range of the track segment.

In a possible manner, the address of the first satellite indicates a track point of the first satellite on the ground projected track or a point in a neighborhood range of the track point; or the address of the first satellite indicates a track segment of the first satellite on the ground projected track or a track segment in a neighborhood range of the track segment.

In a possible manner, the track point is indicated by using one of the following parameters:
a distance from a reference point moving along a first projected track to the track point, a satellite motion phase difference accumulated from the reference point moving along the first projected track to the track point, and a latitude difference accumulated from the reference point moving along the first projected track to the track point, where the reference point is any point on the first projected track, and the first projected track is a ground projected track of any ground co-track satellite chain.

In a possible manner, when the first satellite directly communicates with the ground device, the processing unit is specifically configured to send the data to the ground device through a satellite-to-ground link.

In a possible manner, when the first satellite determines that the first satellite does not directly communicate with the ground device, and a distance between the first satellite and the destination address is the shortest or is less than a distance threshold, the processing unit is specifically configured to send the data to a satellite adjacent to the first satellite on the ground projected track, where the data is routed to the access satellite of the ground device in a route threshold range.

In a possible manner, a route threshold includes at least one of the following parameters: a route hop count threshold and a route path length threshold.

In a possible manner, when the first satellite determines that the first satellite does not directly communicate with the ground device, and a distance between the first satellite and the destination address is not the shortest or is greater than a distance threshold, the processing unit is specifically configured to select a next-hop satellite from the inter-satellite link according to a routing rule and the information about the inter-satellite link of the first satellite, where the routing rule includes: using a satellite that is on the inter-satellite link and that is closest to the destination address as the next-hop satellite; and the transceiver unit is configured to send the data to the next-hop satellite.

In a possible manner, the transceiver unit is further configured to receive a destination address change message, where the destination address change message is triggered based on a change of a track segment on the projected track of the current access satellite, or is triggered based on a change of the ground co-track satellite chain to which the current access satellite belongs.

In a possible manner, the ground device is a terminal or a ground station.

In a possible manner, the address of the first satellite is determined based on at least one of the following parameters:

a longitude and latitude location of the first satellite, an ephemeris of the first satellite, and a first satellite number of the first satellite.

In a possible manner, the transceiver unit is configured to: receive the destination address of the ground device, where when the first satellite is the current access satellite, the destination address of the ground device is determined through calculation based on a location of the ground device and the ground projected track of the first satellite; or receive another address of the ground device, where there is a mapping relationship between the another address and the destination address.

In a possible manner, the satellites in the ground co-track satellite chain have a same inclination angle and are located on discrete orbits.

When the communication apparatus is an apparatus or a chip in the ground device, the processing unit is configured to determine a destination address of the ground device, where the destination address is determined based on a ground projected track of a current access satellite of the ground device, the current access satellite is a satellite on a ground co-track satellite chain, and the ground co-track satellite chain includes a plurality of satellites that have a same ground projected track; and the transceiver unit is configured to send the destination address.

In a possible manner, the destination address indicates a track point that is on the ground projected track of the current access satellite and that is closest to the ground device or a point in a neighborhood range of the track point; or the destination address indicates a track segment that is on the ground projected track of the current access satellite and that is closest to the ground device or a track segment in a neighborhood range of the track segment.

In a possible manner, the track point is indicated by using one of the following parameters:

a distance from a reference point moving along a first projected track to the track point, a satellite motion phase difference accumulated from the reference point moving along the first projected track to the track point, and a latitude difference accumulated from the reference point moving along the first projected track to the track point, where the reference point is any point on the first projected track, and the first projected track is a ground projected track of any ground co-track satellite chain.

In a possible manner, the transceiver unit is further configured to send a destination address change message, where the destination address change message is triggered based on a change of a track segment on the projected track of the current access satellite, or is triggered based on a change of the ground co-track satellite chain to which the current access satellite belongs.

In a possible manner, the ground device is a terminal or a ground station.

In a possible manner, the satellites in the ground co-track satellite chain have a same inclination angle and are located on discrete orbits.

In another possible design, the communication apparatus includes a processor, and may further include a transceiver. The transceiver is configured to send and receive a signal, and the processor executes program instructions, to complete the method in any possible design or implementation of the first aspect to the third aspect. The communication apparatus may further include one or more memories. The memory is configured to be coupled to the processor, and the memory may store a necessary computer program or necessary instructions for implementing the function in any one of the first aspect to the third aspect. The processor may execute the computer program or the instructions stored in the memory. When the computer program is executed or the instructions are executed, the communication apparatus is enabled to implement the method in any possible design or implementation in the first aspect to the third aspect.

In still another possible design, the communication apparatus includes a processor. The processor may be configured to be coupled to a memory. The memory may store a necessary computer program or necessary instructions for implementing the function in any one of the first aspect to the third aspect. The processor may execute the computer program or the instructions stored in the memory. When the computer program is executed or the instructions are executed, the communication apparatus is enabled to implement the method in any possible design or implementation in the first aspect to the third aspect.

In still another possible design, the communication apparatus includes a processor and an interface circuit. The processor is configured to: communicate with another apparatus through the interface circuit, and perform the method in any possible design or implementation of the first aspect to the third aspect.

It may be understood that in the fourth aspect, the processor may be implemented by using hardware or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fifth aspect, an embodiment of this application provides a communication system. The communication system includes the first satellite and the ground device in the first aspect to the third aspect.

According to a sixth aspect, this application provides a chip system. The chip system includes a processor, and may further include a memory, to implement the method in any possible design of the first aspect to the third aspect. The chip system may include a chip, or may include a chip and another discrete component.

According to a seventh aspect, this application further provides a computer-readable storage medium. The computer-readable storage medium stores computer-readable instructions. When the computer-readable instructions are run on a computer, the computer is enabled to perform the method in any possible design of the first aspect to the third aspect.

According to an eighth aspect, this application provides a computer program product including instructions. When the computer program product runs on a computer, the computer is enabled to perform the method in various embodiments of the first aspect to the third aspect.

For technical effects that can be achieved in the second aspect to the eighth aspect, refer to the descriptions of the technical effects that can be achieved in the corresponding possible design solutions in the first aspect. Details are not described herein again in this application.

## BRIEF DESCRIPTION OF DRAWINGS

FIG. 1 is a diagram of a terrestrial communication system;
FIG. 2 is a diagram of a non-terrestrial communication system according to an embodiment of this application;
FIG. 3 is a diagram of an architecture of a 5G satellite communication system according to an embodiment of this application;
FIG. 4A is a diagram of a ground co-track satellite chain;
FIG. 4B is a diagram of movement of ground co-track satellites;
FIG. 5 is a diagram of an architecture of another communication system according to an embodiment of this application;
FIG. 6 is a schematic flowchart of a satellite network routing method according to an embodiment of this application;
FIG. 7 is a diagram of a destination address of a ground device according to an embodiment of this application;
FIG. 8 is a diagram of an address of a satellite according to an embodiment of this application;
FIG. 9 is a diagram of satellite network routing according to an embodiment of this application;
FIG. 10 is a diagram of satellite network routing according to an embodiment of this application;
FIG. 11 is a diagram of a structure of a communication apparatus according to an embodiment of this application;
FIG. 12 is a diagram of a structure of a communication apparatus according to an embodiment of this application; and
FIG. 13 is a diagram of a structure of a communication apparatus according to an embodiment of this application.

## DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In descriptions of this application, unless otherwise specified, "a plurality of" means two or more. Therefore, mutual reference may be made to implementations of an apparatus and a method, and repeated descriptions are not provided again.

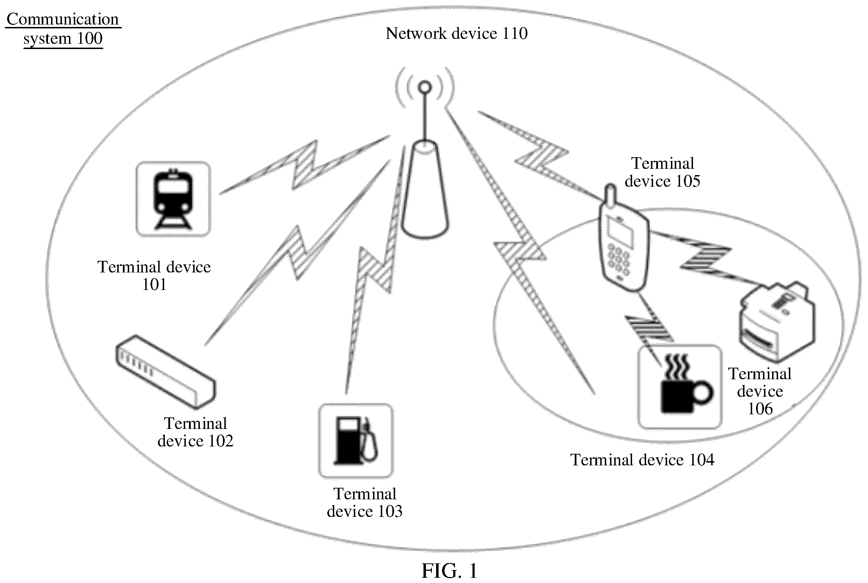

FIG. 1 shows an architecture of a terrestrial network communication system. The communication system 100 may include a network device 110 and terminal devices 101 to 106. It should be understood that the communication system 100 may include more or fewer network devices or terminal devices. The network device or the terminal device may be hardware, or may be software obtained through function division, or may be a combination thereof. In addition, terminal devices 104 to 106 may also form a communication system. For example, the terminal device 105 may send downlink data to the terminal device 104 or the terminal device 106. The network device and the terminal device may communicate with each other through another device or network element. The network device 110 may send downlink data to the terminal devices 101 to 106, or may receive uplink data sent by the terminal devices 101 to 106. Certainly, the terminal devices 101 to 106 may also send uplink data to the network device 110, or may receive downlink data sent by the network device 110.

The network device 110 is a node in a radio access network (radio access network, RAN), and may also be referred to as a base station or a RAN node (or device). Currently, some examples of an access network device are a next generation NodeB (next generation NodeB, gNB), a transmission point (transmitting point, TP), a transmission reception point (transmission reception point, TRP), a home base station (for example, a home evolved NodeB or a home NodeB, HNB), a macro base station, a micro base station (also referred to as a small cell), a relay station, or a baseband unit (baseband unit, BBU) in a 5G network, or a network device in a communication system evolved after 5G, for example, 6th generation (6th generation, 6G). The network device 110 may alternatively be another device having a network device function. For example, the network device 110 may alternatively be a device that undertakes a base station function in device-to-device (device-to-device, D2D), vehicle-to-everything (vehicle-to-everything, V2X), or machine-to-machine (machine-to-machine, M2M) communication; may include a central unit (central unit, CU) and a distributed unit (distributed unit, DU) in a cloud access network (cloud radio access network, C-RAN) system; or may be a network device in an NTN communication system, in other words, the network device 110 may be deployed on a high-altitude platform or a satellite. This is not specifically limited in embodiments of this application.

The terminal devices 101 to 106 may also be referred to as UEs, mobile stations (mobile stations, MSs), mobile terminals (mobile terminals, MTs), or the like, and are devices that provide voice or data connectivity for users, or may be internet-of-things devices. For example, the terminal devices 101 to 106 each include a handheld device, a vehicle-mounted device, or the like that has a wireless connection function. Currently, the terminal devices 101 to 106 each may be a mobile phone (mobile phone), a tablet computer, a notebook computer, a palmtop computer, a customer-premises equipment (customer-premises equipment, CPE), a mobile internet device (mobile internet device, MID), a wearable device (for example, a smart watch, a smart band, or a pedometer), a vehicle-mounted device (for example, a vehicle-mounted device on an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or the like. The terminal devices 101 to 106 may alternatively be other devices having a terminal function. For example, the terminal devices 101 to 106 may alternatively be devices that function as terminals in D2D communication.

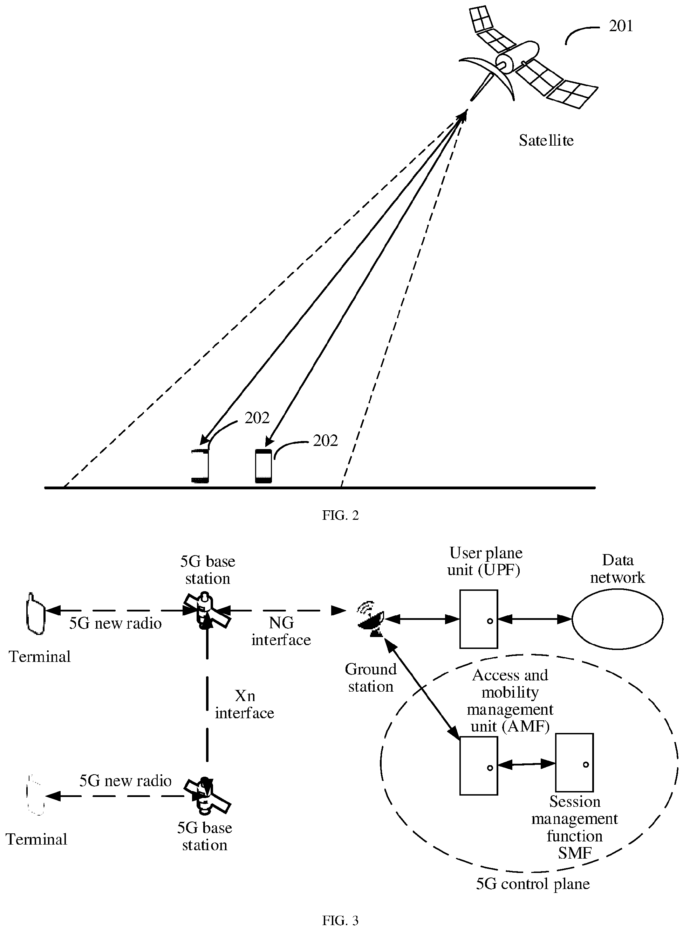

Based on the descriptions of the architecture of the terrestrial network communication system shown in FIG. 1, a satellite network routing method provided in embodiments of this application is applicable to an NTN communication system. As shown in FIG. 2, the NTN communication system includes a satellite 201 and terminal devices 202. For explanations of the terminal device 202, refer to related descriptions of the terminal devices 101 to 106. The satellite 201 may also be referred to as a high-altitude platform, a high-altitude aircraft, or a satellite base station. Upon comparison between the NTN communication system and the terrestrial network communication system, the satellite 201 may be considered as one or more network devices in the architecture of the terrestrial network communication system. The satellite 201 provides a communication service for the terminal devices 202, and the satellite 201 may further be connected to a core network device. For a structure and a function of the satellite 201, refer to the foregoing descriptions of the network device. For a communication manner between the satellite 201 and the terminal device 202, refer to the descriptions in FIG. 1. Details are not described herein again.

5G is used as an example. An architecture of a 5G satellite communication system is shown in FIG. 3. A ground terminal device accesses a network through 5G new radio. A 5G base station is deployed on a satellite, and is connected to a core network on the ground through a wireless link. In addition, a wireless link exists between satellites, to complete signaling exchanging and user data transmission between base stations. Devices and interfaces in FIG. 3 are described as follows:

A 5G core network provides services such as user access control, mobility management, session management, user security authentication, and charging. The 5G core network includes a plurality of functional units, which can be classified into control-plane and data-plane functional entities. An access and mobility management unit (access and mobility management function, AMF) is responsible for user access management, security authentication, and mobility management. A user plane unit (user plane function, UPF) is responsible for managing functions such as user plane data transmission and traffic statistics collection. A session management function (session management function, SMF) is mainly used for session management in a mobile network, for example, session establishment, modification, and release.

A ground station is responsible for forwarding signaling and service data between a satellite base station and the 5G core network.

5G new radio is a wireless link between a terminal and a base station.

An Xn interface is an interface between 5G base stations, and mainly used for exchanging signaling, for example, handover.

An NG interface is an interface between a 5G base station and the 5G core network, and mainly exchanges non-access stratum (non-access stratum, NAS) signaling or other signaling of the core network, and service data of a user.

The network device in the terrestrial network communication system and the satellite in the NTN communication system may be collectively considered as network devices. An apparatus configured to implement a function of a network device may be a network device, or may be an apparatus, for example, a chip system, that can support the network device in implementing the function. The apparatus may be mounted in the network device. When the technical solutions provided in embodiments of this application are described below, an example in which an apparatus configured to implement a function of a network device is a satellite is used to describe the technical solutions provided in embodiments of this application. It may be understood that, when the method provided in embodiments of this application is applied to the terrestrial network communication system, an action performed by the satellite may be performed by a base station or a network device.

In embodiments of this application, an apparatus configured to implement a function of a terminal device may be a terminal device, or may be an apparatus, for example, a chip system, that can support the terminal device in implementing the function. The apparatus may be mounted in the terminal device. In embodiments of this application, the chip system may include a chip, or may include a chip and another discrete component. In the technical solutions provided in embodiments of this application, an example in which an apparatus configured to implement a function of a terminal device is a terminal or a UE is used to describe the technical solutions provided in embodiments of this application.

In addition, the satellite may be a geostationary satellite, a non-geostationary satellite, an artificial satellite, a low earth orbit satellite, a medium earth orbit satellite, a high earth orbit satellite, or the like. This is not specifically limited herein in this application.

For ease of understanding embodiments of this application, the following first briefly describes terms in embodiments of this application.

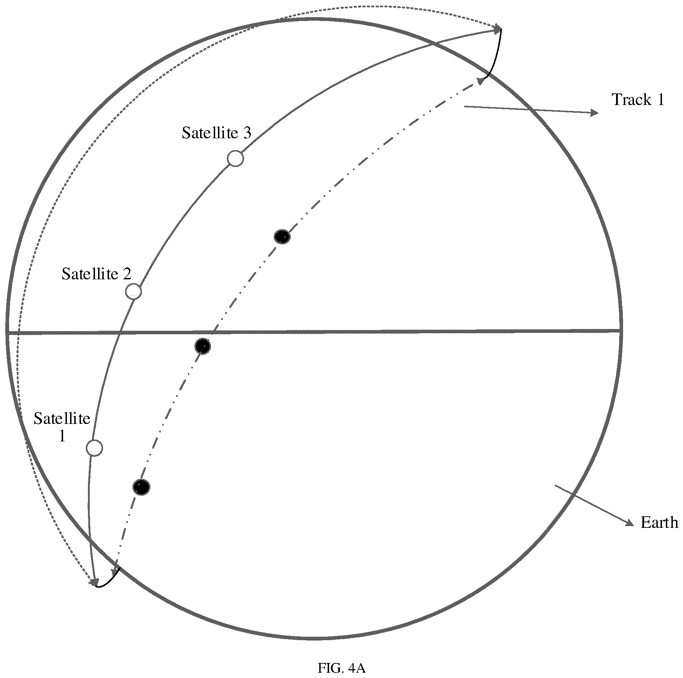

(1) Ground co-track satellite chain: It includes a group of satellites having a same orbital inclination angle, but each satellite is on a discrete orbit, and projected tracks of the satellites on the ground are the same. As shown in FIG. 4A, a satellite 1, a satellite 2, and a satellite 3 are a group of satellites having a same orbital inclination angle and whose ground projected tracks are all a track 1. Example descriptions are merely provided herein, and no specific limitation is imposed. To enable tracks of a ground co-track satellite chain on the ground to be the same, all satellites on the satellite chain need to have a same orbital inclination angle, and any two satellites also have a same ratio of a right ascension of the ascending node (right ascension of the ascending node, RAAN) difference (right ascension of the ascending node difference, where the ascending node is a point at which a satellite passes from the southern hemisphere to the northern hemisphere through the equator) to an argument of latitude (argument of latitude, AoL) difference (argument of latitude difference, where the argument of latitude difference indicates an angular distance between any position of a planet or a satellite on its orbit and the ascending node), and the ratio can exactly compensate for longitude drift caused by the earth's rotation and orbital perturbation, that is, the ratio satisfies the following formula:

$$\frac{\omega_E - \dot{\Omega}}{n_0 + \dot{M}_0 + \dot{\omega}} = \frac{\delta RAAN}{\delta AoL}$$

$\omega_E$ is an angular velocity of the earth's rotation, $n_0$ is a satellite motion angular velocity, $\dot{\Omega}$ is an orbital perturbation amount of right ascension of the ascending node, $\dot{M}_0$ is an orbital perturbation amount of a mean anomaly, $\dot{\omega}$ is an orbital perturbation amount of an argument of perigee, $\delta RAAN$ is the right ascension of the ascending node difference between satellite orbits, and $\delta AoL$ is the argument of latitude difference between the satellites.

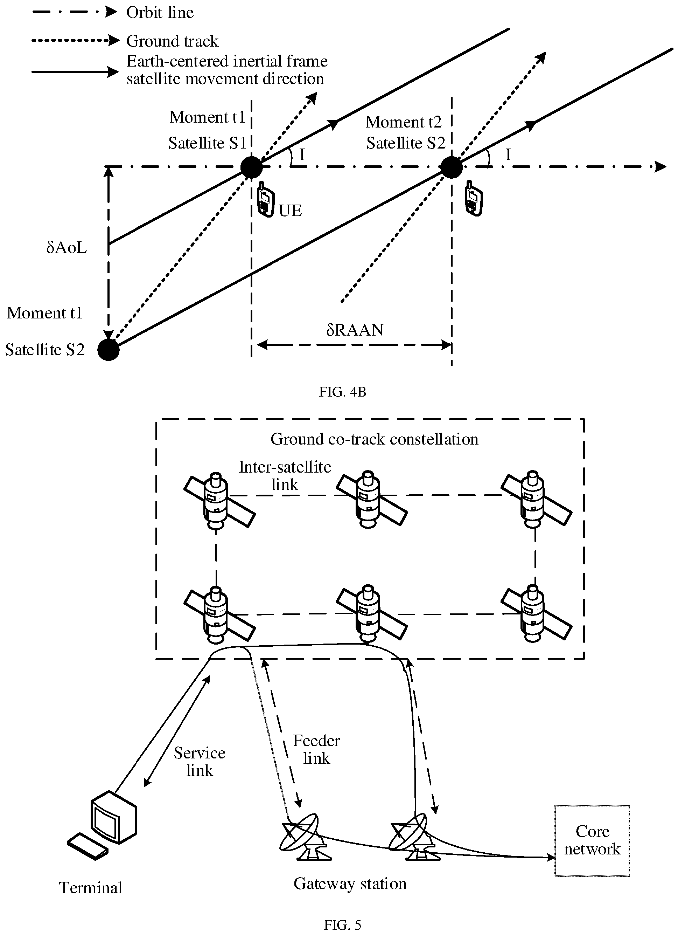

As shown in FIG. 4B, a satellite S1 and a satellite S2 are two satellites of a ground co-track satellite chain. The satellite S1 and the satellite S2 are both on independent orbits, and have a same orbital inclination angle I. At a moment t1, the satellite S1 passes from south to north through an orbit line, a ground projection of the satellite S1 is exactly located at a UE, and the satellite S2 is at south of the orbit line and west of the satellite S1. Because of the earth's rotation, the satellite S2 also passes through a same point on the orbit line at a moment t2, and a ground projection of the satellite S2 is also exactly located at the UE (it is assumed that the UE is stationary). Although the satellite S1 and the satellite S2 run on different orbits, their moving tracks on the ground are the same. For example, the orbit line may be the equator, or may be another orbit line such as the Tropic of Cancer or Tropic of Capricorn.

(2) Ground co-track constellation: It is a constellation including one or more ground co-track satellite chains.

As described in the background, in an existing satellite network, routing efficiency is low, and addressing is complex. In this application, a new satellite network routing method is provided based on a feature that satellites in a ground co-track satellite chain have a same ground projected track. In addition to the systems shown in FIG. 2 and FIG. 3, the method may be further applied to a communication system shown in FIG. 5. Devices in FIG. 5 are described as follows: A ground co-track constellation may forward or route data of a terminal, a gateway station, and a core network.

A satellite in the ground co-track constellation has an inter-satellite link, and may forward data to an adjacent satellite through the inter-satellite link.

Ground facilities include ground devices, such as the terminal and a ground station, that are connected to the ground co-track constellation.

The terminal accesses a network through the satellite, may communicate with the satellite through a service link, and may send data to another terminal or a core network (the internet) through the satellite (the ground co-track constellation).

The gateway station communicates with the satellite (the ground co-track constellation) through a feeder link to provide transit between the satellite and the core network.

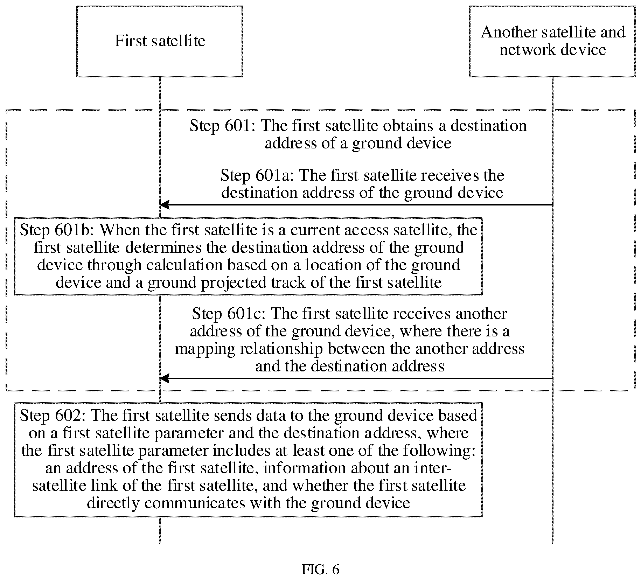

Based on the communication system in FIG. 5, this application provides a satellite network routing method. As shown in FIG. 6, the method may be performed through interaction between a satellite, a ground device, and a network device, where the satellite may be a geostationary satellite, a non-geostationary satellite, an artificial satellite, a low earth orbit satellite, a medium earth orbit satellite, a high earth orbit satellite, or the like; and the ground device may be understood as a UE, a vehicle-mounted device, a chip of a terminal, a ground station, or the like. A type of the terminal is not specifically limited herein in this application. Details are as follows:

Step 601: A first satellite obtains a destination address of a ground device, where the destination address is determined based on a ground projected track of a current access satellite of the ground device, the current access satellite is a satellite on a ground co-track satellite chain, and the ground co-track satellite chain includes a plurality of satellites that have a same ground projected track.

It should be noted that this application is a satellite network routing solution. The first satellite may be understood as a source device, the ground device may be understood as a target device, and that the first satellite sends data to the ground device may be understood as that the source device sends the data to the target device. The ground device may be understood as a ground station or a terminal. Assuming that the first satellite is to send data to a ground station 1, the ground station 1 is the target device in this application. Assuming that the first satellite is to send data to a terminal 2, the terminal 2 is the target device in this application. Example descriptions are merely provided herein in this application, and a type of the ground device is not specifically limited.

In addition, that the destination address is determined based on a ground projected track of a current access satellite of the ground device may be understood as that the destination address is addressed based on the ground projected track of the current access satellite. For example, a point closest to the ground device on the ground projected track is used as the destination address of the ground device, or a point close to the ground device on the ground projected track is used as the destination address of the ground device. Example descriptions are merely provided herein, and how to determine the destination address is not specifically limited.

Optionally, the destination address indicates a track point that is on the ground projected track of the current access satellite and that is closest to the ground device or a point in a neighborhood range of the track point; or the destination address indicates a track segment that is on the ground projected track of the current access satellite and that is closest to the ground device or a track segment in a neighborhood range of the track segment.

The access satellite is a satellite that directly communicates with the ground device. The access satellite may directly send data to the ground device, or may directly receive data from the ground device. Because data transmission between another satellite and the ground device needs to be forwarded through the access satellite, the access satellite may also be understood as a satellite that serves the ground device for a longest time. In addition, because a location of the ground device may be constantly changed, and corresponding access satellites in different time periods are different, current access satellites of the ground device may be different in different time periods. In addition, in an actual application, the access satellite may also be referred to as a ground connected satellite, and may send data to the ground device through a satellite-to-ground link. The satellite-to-ground link may be understood as the feeder link, the service link, or the like in FIG. 5. This is not specifically limited herein in this application. In this application, when the ground device is a ground station, the ground station may access a plurality of access satellites. In this case, there may be a plurality of destination addresses. When routing and sending data, the satellite may send the data to the ground station if the satellite finds any one of the plurality of destination addresses. Certainly, in an actual application, the plurality of destination addresses of the ground station may be prioritized based on communication statuses (resource consumption, memory usage, and the like) of the access satellites. During routing, the satellite may select a destination address with a highest priority to send data.

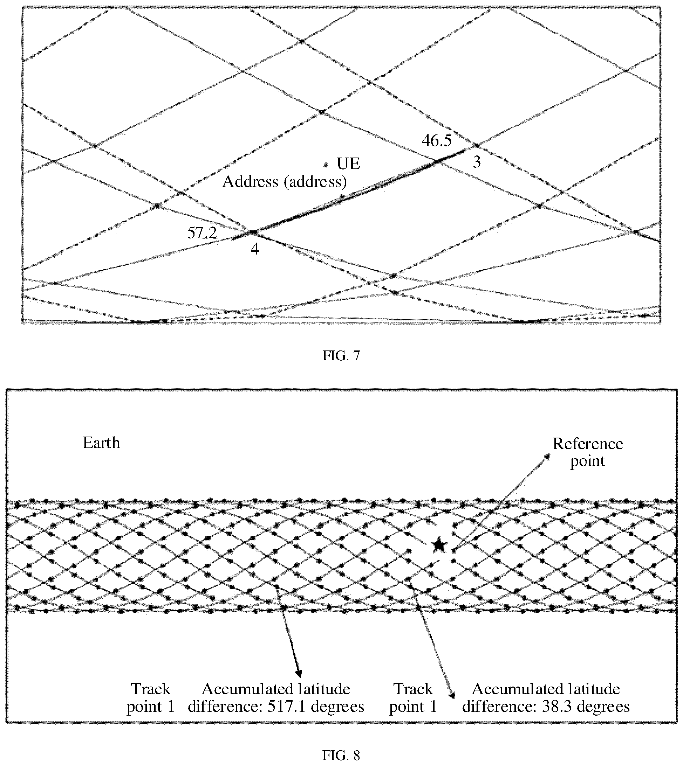

A track location near a track segment (a segment of a ground projected track) in which the current access satellite of the ground device is located is selected as a track point or a track segment. For example, a point closest to the ground device on the track segment is selected as the destination address, for example, a perpendicular line is drawn from the ground device to the track segment. As shown in FIG. 7, if a terminal accesses a ground projected track of satellites 3 and 4, an Address (address) point is selected as a track point, or a segment from 46.5 to 57.2 is selected as a track segment.

In this application, the destination address is indicated by using a track point or a track segment on the ground projected track of the current access satellite, so that a property that the satellites in the ground co-track satellite chain have the same ground projected track can be fully used. During routing and addressing, routing and addressing complexity is reduced, and routing and addressing efficiency is improved.

Optionally, in step 601, the destination address of the ground device is specifically obtained by using one of the following steps:

Step 601a: The first satellite receives the destination address of the ground device.

The destination address of the ground device may be from another network device, ground device, or the like. This is not specifically limited herein in this application.

The another network device may be in a terrestrial system or an NTN system, and the another network device may exchange data with the first satellite, and may further exchange data with the ground device. The another network device is equivalent to a medium for data exchanging between the first satellite and the ground device. For example, the network device is a ground base station in the terrestrial system or a satellite in the NTN system. Example descriptions are merely provided herein, and no specific limitation is imposed.

In a possible implementation, another satellite in the NTN system sends the destination address of the ground device to the first satellite. Because the another satellite may exchange data with the ground device when routing and sending data, and the another satellite may store the destination address of the ground device, the another satellite may directly send the destination address of the ground device to the first satellite, for the first satellite to send data during routing. The another satellite may be a satellite other than the first satellite. This is not specifically limited in this application.

In a possible implementation, there is a communication link between the ground device and a ground base station, and there is a communication link between the ground base station and the first satellite. After determining the destination address, the ground device may send the destination address to the ground base station, and forward the destination address to the first satellite through the ground base station.

In another possible implementation, the ground device may alternatively send only location information (longitude information and latitude information) of the ground device to a network device, and the network device determines the destination address through calculation based on information about the ground projected track of the current access satellite of the ground device and the location information of the ground device, and sends the destination address to the first satellite. This is not specifically limited herein in this application.

In a possible implementation, when the first satellite is the current access satellite, the ground device may directly send the destination address to the first satellite.

Specifically, that the ground device determines the destination address may include: obtaining the information about the ground projected track of the current access satellite, and performing projection on the ground projected track based on current location information of the ground device, where an intersection point with the ground projected track is the destination address of the ground device.

In a possible implementation, the ground device receives the information about the ground projected track that is of the current access satellite and that is sent by the current access satellite of the ground device.

In another possible implementation, the ground device determines, based on satellite parameter information of the current access satellite, the information about the ground projected track of the current access satellite. The satellite parameter information may be orbit parameter information, for example, a semi-major axis (a semi-major axis of the earth (6378.14 km)+an orbital altitude), an eccentricity (which is 0 when the current access satellite is on a circular orbit), an orbital inclination angle (an angle between an orbital plane and an equatorial plane of the earth), an angle of an ascending node (an opening angle between the ascending node and the vernal equinox relative to the earth center), an angle of a perigee (an opening angle between the perigee and the ascending node relative to the earth center), and a perigee moment (a moment at which the satellite is at the perigee). The satellite parameter information may be obtained from ephemeris information of the satellite. The ground device may calculate, based on an orbit parameter of the access satellite, longitude and latitude of a ground projection of the access satellite at a current moment. For example, the ground device may calculate a current moment ($t_c$) by using the orbit parameter of the access satellite, or longitude and latitude of a ground projection of the access satellite in a period of time ($t_c$-$\Delta t_1$, $t_c$+$\Delta t_2$) including the current moment, to determine the information about the ground projected track of the current access satellite, where $\Delta t1$ and $\Delta t2$ are greater than or equal to zero.

Step 601b: When the first satellite is the current access satellite, the first satellite determines the destination address of the ground device through calculation based on a location of the ground device and the ground projected track of the first satellite.

Specifically, the first satellite may obtain the location (longitude and latitude of the location) of the ground device, and determine the destination address of the ground device through calculation based on the location of the ground device and the ground projected track of the first satellite. For example, a point that is on the ground projected track of the first satellite and that is closest to the ground device is used as a track point, and the destination address of the ground device is indicated by using a location of the track point.

Step 601c: The first satellite receives another address of the ground device, where there is a mapping relationship between the another address and the destination address.

Specifically, the ground device may send the another address to the current access satellite or a network device, and send the another address of the ground device to the first satellite through the current access satellite or the network device; or another satellite that communicates with the ground device sends the another address to the first satellite. This is not specifically limited herein in this application. The another address may be an internet protocol (internet protocol, IP) address, a media access control (media access control, MAC) address, or the like of the ground device. There is a mapping relationship between the another address and the destination address, and the destination address of the ground device may be determined based on the mapping relationship between the another address and the destination address. As shown in the following Table 1, the mapping relationship between the another address of the ground device and the destination address is as follows: An IP address 1 of a terminal 1 corresponds to a destination address 2, a MAC address 2 of a ground station 2 corresponds to a destination address 1, and so on. Example descriptions are merely provided herein, and one-by-one illustrations are not provided.

Table 1

| Ground devices | Other addresses of the ground devices | Destination addresses of the ground devices |
| --- | --- | --- |
| Terminal 1 | IP address 1 | Destination address 2 |
| Ground station 2 | MAC address 2 | Destination address 1 |
| ... | ... | ... |

Step 602: The first satellite sends data to the ground device based on a first satellite parameter and the destination address, where the first satellite parameter includes at least one of the following: an address of the first satellite, information about an inter-satellite link of the first satellite, and whether the first satellite directly communicates with the ground device.

It should be noted that, the address of the first satellite indicates a track point of the first satellite on a ground projected track or a point in a neighborhood range of the track point; or the address of the first satellite indicates a track segment of the first satellite on a ground projected track or a track segment in a neighborhood range of the track segment.

In this application, the address of the first satellite is indicated by using the track point or the track segment of the first satellite on the ground projected track, so that the property that the satellites in the ground co-track satellite chain have the same ground projected track can be fully used. During routing and addressing, the routing and addressing complexity is reduced, and the routing and addressing efficiency is improved.

When the destination address of the ground device and the address of the first satellite are determined, the track point is mentioned. Optionally, the track point is indicated by using one of the following parameters:

a distance from a reference point moving along a first projected track to the track point, a satellite motion phase difference accumulated from the reference point moving along the first projected track to the track point, and a latitude difference accumulated from the reference point moving along the first projected track to the track point, where the reference point is any point on the first projected track, and the first projected track is a ground projected track of any ground co-track satellite chain.

For example, the track point may be indicated by using a distance from the reference point to the track point. For example, the reference point is any point on a projected track 1, and a location 10 meters away from the reference point is the track point. In this case, the track point may be indicated by using 10 meters. The track point may be indicated by using a satellite motion phase difference accumulated from the reference point to the track point. For example, the reference point is any point on a projected track 1, a satellite ground projection is located at the reference point at a moment 1, and the satellite ground projection is located at the track point after X moments. In this case, the track point may be indicated by using a satellite motion phase difference accumulated from the moment 1 to a moment X+1. The track point may be indicated by using a latitude difference accumulated from the reference point to the track point. For example, the reference point is any point on a projected track 1, the reference point is located at latitude 1, and Y latitude needs to be passed from the reference point to the track point. In this case, the track point may be indicated by using the Y latitude. The track point is indicated in different manners, so that routing and addressing flexibility can be improved.

In a possible implementation, a track location accumulated from the reference point to the track point may be defined as a ground projected track address (ground track address, GTA). As shown in FIG. 8, a track point shown by a pentagram is a reference point, if an accumulated latitude difference of a satellite moving along a ground track is used as a location difference, a GTA of a track point 1 is a latitude difference accumulated from the reference point to the track point 1, that is, 38.3 degrees, and a GTA of a track point 2 is a latitude difference accumulated from the reference point to the track point 2, that is, 517.1 degrees. In addition, when there are a plurality of satellite tracks on the ground, each satellite track may be distinguished by using a track number, and a track location may be jointly described by using the track number and a location on the track. In addition, a track segment of the ground track may be defined as a ground track address range (ground track address range, GTAR), and may be generally described by using GTAs at two ends of the track, for example, a track GTAR between the track point 1 and the track point 2 is (GTA0, GTA1).

Optionally, the address of the first satellite may be determined based on at least one of the following parameters: a longitude and latitude location of the first satellite, an ephemeris of the first satellite, and a first satellite number of the first satellite.

For example, current location information of the first satellite may be learned of based on the longitude and latitude location of the first satellite. The ephemeris of the first satellite includes information such as orbit information of the first satellite and an altitude of the first satellite. The current location information of the first satellite may be obtained based on the ephemeris of the first satellite. Satellites may be sequentially numbered based on a sequence of the satellites in the ground co-track satellite chain. The ephemeris of the first satellite may be learned of based on the number of the first satellite, and a current location of the first satellite is further determined based on the ephemeris of the first satellite. A location of the first satellite on the ground projected track may be learned of based on the current location information of the first satellite, and the address of the first satellite may be obtained based on preset reference point information.

To describe the solution in step 602 more clearly, the following describes the first satellite parameter in different cases.

Case 1: The first satellite parameter includes whether the first satellite directly communicates with the ground device.

Optionally, if the first satellite is an access satellite, the first satellite directly communicates with the ground device, and the first satellite may send data to the ground device through the satellite-to-ground link. The satellite-to-ground link may be understood as a feeder link or a service link. The first satellite directly communicates with the ground device, and the first satellite directly sends the data to the ground device, without needing to determine a routing path. This can reduce a routing path calculation amount, and improve routing efficiency.

Optionally, if the first satellite does not directly communicate with the ground device, the first satellite further needs to obtain the address of the first satellite and the information about the inter-satellite link of the first satellite, and determines, based on the parameters, how the first satellite sends data to the ground device.

Case 2: The first satellite parameter includes the address of the first satellite.

Optionally, when the first satellite determines that the first satellite does not directly communicate with the ground device, and a distance between the first satellite and the destination address is the shortest or is less than a distance threshold, the first satellite sends data to a satellite adjacent to the first satellite on the ground projected track, where the data is routed to the access satellite of the ground device in a route threshold range. A route threshold includes at least one of the following parameters: a route hop count threshold and a route path length threshold. Certainly, in an actual application, the route threshold may be further related to another parameter, for example, a weighted value of the route hop count threshold and the route path length threshold. This is not specifically limited in this application.

It is assumed that the first satellite is a satellite closest to a destination address of a terminal, but the satellite is not an access satellite of the terminal, and a number of the access satellite of the terminal is 8. It is assumed that a route threshold is a hop count 2, and data may be forwarded on the projected track of the first satellite (a satellite numbered 1) through one hop, the data on one path arrives at a satellite numbered 3, and the data on the other path arrives at a satellite numbered 7. If the data does not arrive at the satellite numbered 8 after being forwarded through one hop, the data continues to be forwarded. Then, the data is forwarded through one hop from the satellite numbered 3 to a satellite numbered 4, and from the satellite numbered 7 to the satellite numbered 8. In this case, the satellite numbered 4 does not need to continue to forward the data, and the satellite numbered 8 forwards the data to the terminal. In addition, if the forwarded data of the first satellite reaches the satellite numbered 8 and the satellite numbered 3 through one-hop data forwarding, and the access satellite is already determined at this time, although the data forwarding route threshold is the hop count 2, the data does not need to be continued to be forwarded, and the satellite numbered 8 forwards the data to the terminal. Example descriptions are merely provided herein, and no specific limitation is imposed.

The data is routed to the access satellite of the ground device in the route threshold range, so that a routing path calculation amount can be reduced, and routing efficiency can be improved.

Case 3: The first satellite parameter includes the information about the inter-satellite link of the first satellite.

Optionally, when the first satellite determines that the first satellite does not directly communicate with the ground device, and a distance between the first satellite and the destination address is not the shortest or is greater than a distance threshold, the first satellite selects a next-hop satellite from the inter-satellite link according to a routing rule and the information about the inter-satellite link of the first satellite, where the routing rule includes: using a satellite that is on the inter-satellite link and that is closest to the destination address as the next-hop satellite; and sends data to the next-hop satellite.

It should be noted that an inter-satellite link is a link for communication between satellites, and is also referred to as an intersatellite link or a crosslink (crosslink). Data transmission and exchanging between the satellites may be implemented through the inter-satellite link. A plurality of satellites are interconnected through the inter-satellite link, to form a space communication network in which the satellite is used as a switching node. The information about the inter-satellite link of the first satellite includes a communication link of the first satellite. For example, a satellite number of the first satellite is 1, and the information about the inter-satellite link of the first satellite includes: satellites whose satellite numbers are 2, 3, 158, and 159, in other words, the first satellite may transmit data with the satellite 2, the satellite 3, the satellite 158, and the satellite 159.

It is assumed that the first satellite is not a satellite closest to a destination address of a terminal, and the satellite is not an access satellite of the terminal. The first satellite selects an appropriate satellite from the inter-satellite link of the first satellite as a next-hop satellite according to the routing rule, and sends data to the next-hop satellite, and the next-hop satellite forwards the data based on a satellite parameter of the next-hop satellite. The routing rule may include: A satellite that is on the inter-satellite link and that is closest to the destination address is used as the next-hop satellite. For example, a satellite number of the first satellite is 1, and the information about the inter-satellite link of the first satellite includes:

Satellites whose satellite numbers are 2, 3, 158, and 159, where the satellite 159 is a satellite closest to the destination address. In this case, a next-hop satellite of the satellite 1 is the satellite 159. In the routing rule, congestion or traffic balancing of the inter-satellite link may further be considered, and a satellite with a small quantity of services on the inter-satellite link is used as the next-hop satellite. In this manner, a routing path calculation amount can be reduced, and routing efficiency can be improved.

Certainly, in an actual application, the first satellite parameter may include the foregoing plurality of parameters. For example, the first satellite parameter includes: the address of the first satellite and the information about the inter-satellite link of the first satellite. In an actual application, how to send data to the ground device may be flexibly determined based on the first satellite parameter and the destination address. This is not specifically limited herein in this application.

In addition, the destination address of the ground device may be changed. Sending of data based on the address before the change may be incorrect. Optionally, the first satellite may receive a destination address change message. The destination address change message is triggered based on a change of a track segment of the projected track of the current access satellite, or is triggered based on a change of a ground co-track satellite chain to which the current access satellite belongs.

For example, if a projected track segment GTAR1 (GTA3, GTA5) of the current access satellite is changed to GTAR2 (GTA7, GTA9), the current access satellite may trigger the destination address change message, or a track identifier of the projected track of the current access satellite is changed from a track 1 to a track 2, in other words, the ground co-track satellite chain to which the current access satellite belongs is changed. In this case, the current access satellite may trigger the destination address change message. The destination address change message may be sent to the first satellite after the current access satellite of the ground device obtains the destination address change message from the ground device, or may be forwarded through another satellite after the ground device sends the destination address change message to the another satellite. Example descriptions are merely provided herein, and no specific limitation is imposed.

It should be noted that the first satellite receives the destination address change message, so that a routing path can be flexibly adjusted, to ensure the data routing efficiency.

In this application, in consideration of the property that the satellites in the ground co-track satellite chain have the same ground projected track, when the ground device is routed and addressed, the destination address of the ground device is determined based on the ground projected track of the current access satellite of the ground device. The routing and addressing in this manner can improve the routing efficiency, and reduce a data storage capacity of the satellite. When sending data to the ground device, the first satellite may send the data based on the first satellite parameter and the destination address. Because the first satellite is not always in a static state, the first satellite parameter is flexibly changed. The first satellite sends the data based on the first satellite parameter and the destination address, so that the routing path can be flexibly adjusted.

To better describe the solutions of this application, the following two specific examples are used for description.

Example 1: The destination address of the ground device is indicated by using a GTA.

During routing in a satellite network, a destination address GTA of a terminal is used for addressing. To route or forward data, the following steps may be performed.

Step 1: A satellite first determines whether the satellite is an access satellite of the terminal or a satellite closest to the destination address of the terminal; and if the satellite is the access satellite, performs step 4; or if the satellite is the satellite closest to the destination address of the terminal, performs step 3; otherwise, performs step 2.

Step 2: The satellite selects an appropriate satellite from an inter-satellite link of the satellite as a next-hop satellite according to a routing rule, for example, selects a satellite closest to the terminal as the next-hop satellite from peer satellites (that is, satellites that have data transmission with the satellite) of the inter-satellite link of the satellite. Then, the next-hop satellite may continue to perform step 1.

Step 3: If the satellite is the satellite closest to the destination address of the terminal and is not the access satellite, the satellite forwards a maximum hop count (which is determined based on a satellite density, a maximum elevation angle of the terminal, and the like) to other satellites on a ground projected track until the access satellite is found or the hop count threshold is reached; or forward a maximum track length to satellites on a ground projected track until the access satellite is found or the length threshold is reached.

Step 4: If the satellite is the access satellite, the satellite sends the data to the terminal through a satellite-to-ground link.

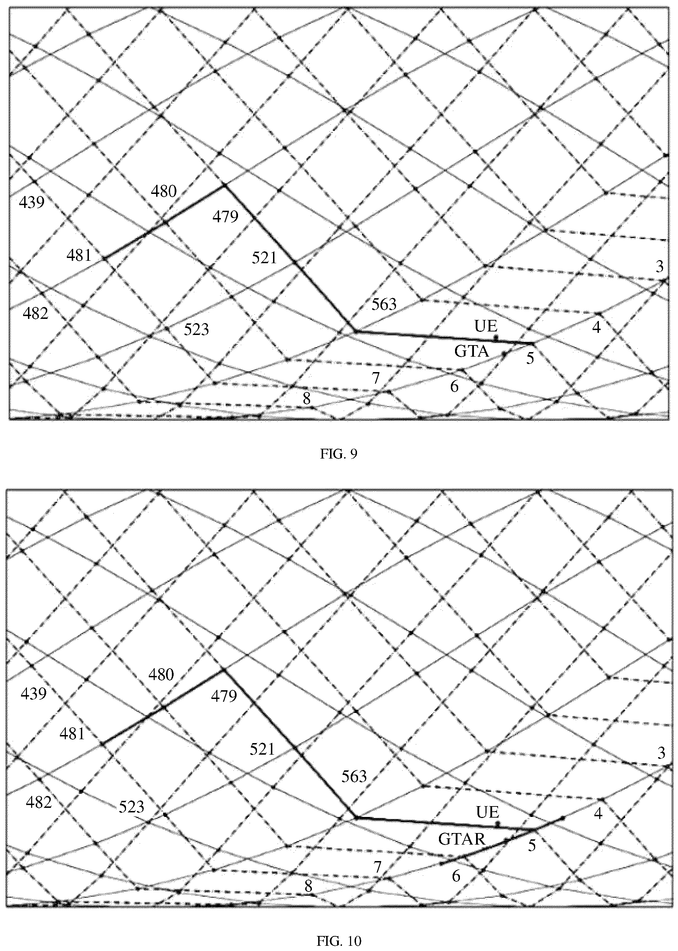

As shown in FIG. 9, solid lines and dashed lines in the figure indicate different projected tracks. It is assumed that data is sent from a satellite 481 to a UE, and an address of the UE is GTA=51. The satellite 481 has four inter-satellite links, and peer satellites are respectively satellites 482, 480, 439, and 523. The satellite 480 is selected as a next-hop satellite based on a shortest path, and routing is performed in sequence of satellites 480, 479, 521, 563, and 5. The satellite 5 is a satellite closest to GTA=51. If an access satellite of the UE is the satellite 5, the satellite 5 sends data to the UE; or if an access satellite of the UE is not the satellite 5, the access satellite performs forwarding along both sides on a ground projected track of the satellite 5. Assuming that a maximum hop count is set to 2, if an access satellite of the UE is a satellite 4 or a satellite 6, the routing ends through one hop; if the access satellite of the UE is not the satellite 4 or the satellite 6, the access satellite continues to forward the data to a satellite 3 and a satellite 7; and if the access satellite of the UE is a satellite 7, the satellite 7 sends the data to the UE, and the satellite 3 does not forward the data.

Example 2: The destination address of the ground device is indicated by using a GTAR.

During routing in a satellite network, a destination address GTAR of a terminal is used for addressing. To route or forward data, the following steps may be performed.

Step 1: A satellite first determines, based on an address of the satellite, whether the satellite is located in the GTAR; and if the satellite is located in the GTAR, performs step 3; otherwise, performs step 2.

Step 2: The satellite selects an appropriate satellite from an inter-satellite link of the satellite as a next-hop satellite according to a routing rule, for example, selects a peer satellite closest to the terminal as the next-hop satellite.

Step 3: If the satellite is an access satellite, the satellite performs step 4. If the satellite is not the access satellite, the satellite forwards the data to another satellite in the GTAR. If the forwarding is performed for the first time, the data is forwarded to left and right ends; or if the forwarding is not performed for the first time, the data is forwarded in a determined direction. If a peer satellite is not in the GTAR, the forwarding is ends.

Step 4: If the satellite is the access satellite, the satellite sends the data to the terminal through a satellite-to-ground link.

As shown in FIG. 10, solid lines and dashed lines in the figure indicate different projected tracks. It is assumed that data is sent from a satellite 481 to a UE, and an address of the UE is GTAR=(41.4, 61.5). The satellite 481 has four inter-satellite links, and peer satellites are respectively satellites 482, 480, 439, and 523. The satellite 480 is selected as a next-hop satellite based on a shortest path, and routing is performed in sequence of satellites 480->479->521->563->5. The satellite 5 is a satellite closest to GTAR=(41.4, 61.5). If an access satellite of the UE is the satellite 5, the satellite 5 sends data to the UE; or if an access satellite of the UE is not the satellite 5, the access satellite performs forwarding along both sides on a ground projected track of the satellite 5. Assuming that a maximum hop count is set to 2, if a forward satellite 4 is not in the GTAR, the forwarding ends; and if a backward satellite 6 is in the GTAR, the data is forwarded to the satellite 6. If the satellite 6 is the access satellite, the satellite 6 sends data to the UE; or if the satellite 6 is not the access satellite, the satellite 6 continues to forward the data ahead, and if a satellite 7 is not in the GTAR, the data forwarding ends.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

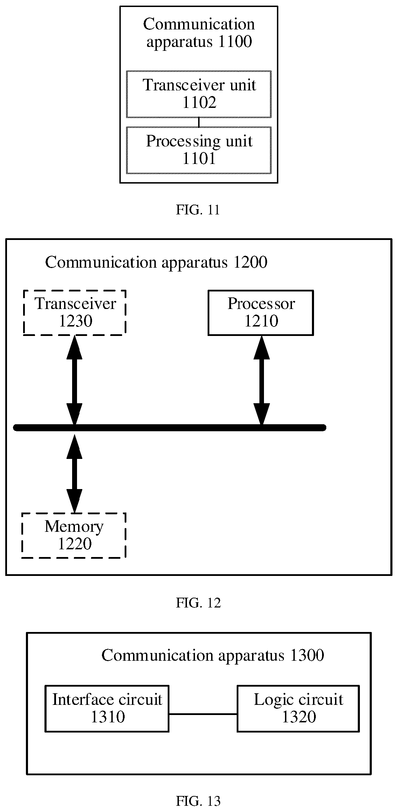

When an integrated unit is used, FIG. 11 is a possible example block diagram of a communication apparatus according to an embodiment of this application. As shown in FIG. 11, the communication apparatus 1100 may include a processing unit 1101 and a transceiver unit 1102. The processing unit 1101 is configured to control and manage an action of the communication apparatus 1100. The transceiver unit 1102 is configured to support communication between the communication apparatus 1100 and another device. Optionally, the transceiver unit 1102 may include a receiving unit and/or a sending unit, which are respectively configured to perform a receiving operation and a sending operation. Optionally, the communication apparatus 1100 may further include a storage unit, configured to store program code and/or data of the communication apparatus 1100. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the ground device, first satellite, or the like.

In an embodiment, the transceiver unit 1102 is configured to obtain a destination address of a ground device, where the destination address is determined based on a ground projected track of a current access satellite of the ground device, the current access satellite is a satellite on a ground co-track satellite chain, and the ground co-track satellite chain includes a plurality of satellites that have a same ground projected track; and the processing unit 1101 is configured to send data to the ground device based on a first satellite parameter and the destination address, where the first satellite parameter includes at least one of the following: an address of the first satellite, information about an inter-satellite link of the first satellite, and whether the first satellite directly communicates with the ground device.

In a possible manner, the destination address indicates a track point that is on the ground projected track of the current access satellite and that is closest to the ground device or a point in a neighborhood range of the track point; or the destination address indicates a track segment that is on the ground projected track of the current access satellite and that is closest to the ground device or a track segment in a neighborhood range of the track segment.

In a possible manner, the address of the first satellite indicates a track point of the first satellite on the ground projected track or a point in a neighborhood range of the track point; or the address of the first satellite indicates a track segment of the first satellite on the ground projected track or a track segment in a neighborhood range of the track segment.

In a possible manner, the track point is indicated by using one of the following parameters:
a distance from a reference point moving along a first projected track to the track point, a satellite motion phase difference accumulated from the reference point moving along the first projected track to the track point, and a latitude difference accumulated from the reference point moving along the first projected track to the track point, where the reference point is any point on the first projected track, and the first projected track is a ground projected track of any ground co-track satellite chain.

In a possible manner, when the first satellite directly communicates with the ground device, the processing unit 1101 is specifically configured to send the data to the ground device through a satellite-to-ground link.

In a possible manner, when the first satellite determines that the first satellite does not directly communicate with the ground device, and a distance between the first satellite and the destination address is the shortest or is less than a distance threshold, the processing unit 1101 is specifically configured to send the data to a satellite adjacent to the first satellite on the ground projected track, where the data is routed to the access satellite of the ground device in a route threshold range.

In a possible manner, a route threshold includes at least one of the following parameters: a route hop count threshold and a route path length threshold.

In a possible manner, when the first satellite determines that the first satellite does not directly communicate with the ground device, and a distance between the first satellite and the destination address is not the shortest or is greater than a distance threshold, the processing unit 1101 is specifically configured to select a next-hop satellite from the inter-satellite link according to a routing rule and the information about the inter-satellite link of the first satellite, where the routing rule includes: using a satellite that is on the inter-satellite link and that is closest to the destination address as the next-hop satellite; and the transceiver unit is configured to send the data to the next-hop satellite.

In a possible manner, the transceiver unit 1102 is further configured to receive a destination address change message, where the destination address change message is triggered based on a change of a track segment on the projected track of the current access satellite, or is triggered based on a change of the ground co-track satellite chain to which the current access satellite belongs.

In a possible manner, the ground device is a terminal or a ground station.

In a possible manner, the address of the first satellite is determined based on at least one of the following parameters:
a longitude and latitude location of the first satellite, an ephemeris of the first satellite, and a first satellite number of the first satellite.

In a possible manner, the transceiver unit 1102 is configured to receive the destination address of the ground device, where when the first satellite is the current access satellite, the destination address of the ground device is determined through calculation based on a location of the ground device and the ground projected track of the first satellite; or receive another address of the ground device, where there is a mapping relationship between the another address and the destination address.

In a possible manner, the satellites in the ground co-track satellite chain have a same inclination angle and are located on discrete orbits.

In another possible design, the processing unit 1101 is configured to determine a destination address of the ground device, where the destination address is determined based on a ground projected track of a current access satellite of the ground device, the current access satellite is a satellite on a ground co-track satellite chain, and the ground co-track satellite chain includes a plurality of satellites that have a same ground projected track; and the transceiver unit 1102 is configured to send the destination address.

In a possible manner, the destination address indicates a track point that is on the ground projected track of the current access satellite and that is closest to the ground device or a point in a neighborhood range of the track point; or the destination address indicates a track segment that is on the ground projected track of the current access satellite and that is closest to the ground device or a track segment in a neighborhood range of the track segment.

In a possible manner, the track point is indicated by using one of the following parameters:
a distance from a reference point moving along a first projected track to the track point, a satellite motion phase difference accumulated from the reference point moving along the first projected track to the track point, and a latitude difference accumulated from the reference point moving along the first projected track to the track point, where the reference point is any point on the first projected track, and the first projected track is a ground projected track of any ground co-track satellite chain.

In a possible manner, the transceiver unit 1102 is further configured to send a destination address change message, where the destination address change message is triggered based on a change of a track segment on the projected track of the current access satellite, or is triggered based on a change of the ground co-track satellite chain to which the current access satellite belongs.

In a possible manner, the ground device is a terminal or a ground station.

In a possible manner, the satellites in the ground co-track satellite chain have a same inclination angle and are located on discrete orbits.

FIG. 12 shows a communication apparatus 1200 further provided in this application. The communication apparatus 1200 may be a chip or a chip system. The communication apparatus may be located in the device in any one of the foregoing method embodiments, for example, the first satellite, the network device, or the ground device, to perform an action corresponding to the device.

Optionally, the chip system may include a chip, or may include a chip and another discrete component.

The communication apparatus 1200 includes a processor 1210.

The processor 1210 is configured to execute a computer program stored in a memory 1220, to implement actions of the devices in any one of the foregoing method embodiments.

The communication apparatus 1200 may further include the memory 1220, configured to store the computer program.

Optionally, the memory 1220 is coupled to the processor 1210. The coupling is an indirect coupling or a communication connection between apparatuses, units, or modules, may be in an electrical form, a mechanical from, or another form, and is used for information exchange between the apparatuses, the units, or the modules. Optionally, the memory 1220 and the processor 1210 are integrated together.

There may be one or more processors 1210 and one or more memories 1220. This is not limited.

Optionally, in an actual application, the communication apparatus 1200 may include or may not include a transceiver 1230. A dashed box is used as an example in the figure. The communication apparatus 1200 may exchange information with another device through the transceiver 1230. The transceiver 1230 may be a circuit, a bus, a transceiver, or any other apparatus that may be configured to exchange information.

In a possible implementation, the communication apparatus 1200 may be the first satellite or the ground device in the foregoing method embodiments.

A specific connection medium between the transceiver 1230, the processor 1210, and the memory 1220 is not limited in this embodiment of this application. In this embodiment of this application, the memory 1220, the processor 1210, and the transceiver 1230 are connected through a bus in FIG. 12. The bus is represented by using a thick line in FIG. 12. A manner of a connection between other components is merely an example for description, and is not limited thereto. The bus may be classified into an address bus, a data bus, a control bus, and the like. For ease of representation, only one bold line indicates the bus in FIG. 12, but this does not mean that there is only one bus or only one type of bus. In embodiments of this application, the processor may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware in the processor and a software module.

In embodiments of this application, the memory may be a nonvolatile memory, such as a hard disk drive (hard disk drive, HDD) or a solid-state drive (solid-state drive, SSD), or may be a volatile memory (volatile memory), such as a random access memory (random access memory, RAM). Alternatively, the memory may be any other medium that can be configured to carry or store expected program code in a form of an instruction or a data structure and that can be accessed by a computer, but is not limited thereto. Alternatively, the memory in embodiments of this application may be a circuit or any other apparatus that can implement a storage function, and is configured to store a computer program, program instructions, and/or data.

Based on the foregoing embodiments, refer to FIG. 13. An embodiment of this application further provides another communication apparatus 1300, including an interface circuit 1310 and a logic circuit 1320. The interface circuit 1310 may be understood as an input/output interface, and may be configured to perform sending and receiving steps of each device in any one of the foregoing method embodiments. The logic circuit 1320 may be configured to run code or instructions to perform the method performed by each device in any one of the foregoing embodiments. Details are not described again.

Based on the foregoing embodiments, an embodiment of this application further provides a computer-readable storage medium. The computer-readable storage medium stores instructions. When the instructions are executed, the method performed by each device in any one of the foregoing method embodiments is implemented. The computer-readable storage medium may include any medium that can store program code, such as a USB flash drive, a removable hard disk drive, a read-only memory, a random access memory, a magnetic disk, or an optical disc.

Based on the foregoing embodiments, an embodiment of this application provides a communication system. The communication system includes the first satellite, the ground device, and the another satellite mentioned in any one of the foregoing method embodiments, and may be configured to perform the method performed by each device in any one of the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or the block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

Alternatively, these computer program instructions may be stored in a computer-readable memory that can indicate the computer or another programmable data processing apparatus to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

**Claims**

1. A satellite network routing method, comprising:

   obtaining, by a first satellite, a destination address of a ground device, wherein the destination address is determined based on a ground projected track of a current access satellite of the ground device, the current access satellite is a satellite on a ground co-track satellite chain, and the ground co-track satellite chain comprises a plurality of satellites that have a same ground projected track; and
   sending, by the first satellite, data to the ground device based on a first satellite parameter and the destination address, wherein the first satellite parameter comprises at least one of the following: an address of the first satellite, information about an inter-satellite link of the first satellite, and whether the first satellite directly communicates with the ground device.

2. The method according to claim 1, wherein the destination address indicates a track point closest to the ground device on the ground projected track of the current access satellite or a point in a neighborhood range of the track point; or the destination address indicates a track segment closest to the ground device on the ground projected track of the current access satellite or a track segment in a neighborhood range of the track segment.

3. The method according to claim 1 or 2, wherein the address of the first satellite indicates a track point of the first satellite on a ground projected track or a point in a neighborhood range of the track point; or the address of the first satellite indicates a track segment of the first satellite on a ground projected track or a track segment in a neighborhood range of the track segment.

4. The method according to claim 2 or 3, wherein the track point is indicated by using one of the following parameters: a distance from a reference point moving along a first projected track to the track point, a satellite motion phase difference accumulated from the reference point moving along the first projected track to the track point, and a latitude difference accumulated from the reference point moving along the first projected track to the track point, wherein the reference point is any point on the first projected track, and the first projected track is a ground projected track of any ground co-track satellite chain.

5. The method according to any one of claims 1 to 4, wherein the first satellite directly communicates with the ground device, and the sending, by the first satellite, data to the ground device based on a first satellite parameter and the destination address comprises:
   sending, by the first satellite, the data to the ground device through a satellite-to-ground link.

6. The method according to any one of claims 1 to 4, wherein when the first satellite determines that the first satellite does not directly communicate with the ground device, and a distance between the first satellite and the destination address is the shortest or is less than a distance threshold, the sending, by the first satellite, data to the ground device based on a first satellite parameter and the destination address comprises:
   sending, by the first satellite, the data to a satellite adjacent to the first satellite on the ground projected track, wherein the data is routed to the access satellite of the ground device in a route threshold range.

7. The method according to claim 6, wherein a route threshold comprises at least one of the following parameters:
   a route hop count threshold and a route path length threshold.

8. The method according to any one of claims 1 to 4, wherein when the first satellite determines that the first satellite does not directly communicate with the ground device, and a distance between the first satellite and the destination address is not the shortest or is greater than a distance threshold, the sending, by the first satellite, data to the ground device based on a first satellite parameter and the destination address comprises:

   selecting, by the first satellite, a next-hop satellite from the inter-satellite link according to a routing rule and the information about the inter-satellite link of the first satellite, wherein the routing rule comprises: using a satellite that is on the inter-satellite link and that is closest to the destination address as the next-hop satellite; and sending, by the first satellite, the data to the next-hop satellite.

9. The method according to any one of claims 1 to 8, wherein the method further comprises:
   receiving, by the first satellite, a destination address change message, wherein the destination address change message is triggered based on a change of a track segment on the projected track of the current access satellite, or is triggered based on a change of the ground co-track satellite chain to which the current access satellite belongs.

10. The method according to any one of claims 1 to 9, wherein the ground device is a terminal or a ground station.

11. The method according to any one of claims 1 to 10, wherein the address of the first satellite is determined based on at least one of the following parameters:
    a longitude and latitude location of the first satellite, an ephemeris of the first satellite, and a first satellite number of the first satellite.

12. The method according to any one of claims 1 to 11, wherein the obtaining, by a first satellite, a destination address of a ground device comprises:

    receiving, by the first satellite, the destination address of the ground device;
    when the first satellite is the current access satellite, determining, by the first satellite, the destination address of the ground device through calculation based on a location of the ground device and the ground projected track of the first satellite; or
    receiving, by the first satellite, another address of the ground device, wherein there is a mapping relationship between the another address and the destination address.

13. The method according to any one of claims 1 to 12, wherein the satellites in the ground co-track satellite chain have a same inclination angle and are located on discrete orbits.

14. A satellite network routing method, comprising:

determining, by a ground device, a destination address of the ground device, wherein the destination address is determined based on a ground projected track of a current access satellite of the ground device, the current access satellite is a satellite on a ground co-track satellite chain, and the ground co-track satellite chain comprises a plurality of satellites that have a same ground projected track; and
sending, by the ground device, the destination address.

15. The method according to claim 14, wherein the destination address indicates a track point closest to the ground device on the ground projected track of the current access satellite or a point in a neighborhood range of the track point; or the destination address indicates a track segment closest to the ground device on the ground projected track of the current access satellite or a track segment in a neighborhood range of the track segment.

16. The method according to claim 15, wherein the track point is indicated by using one of the following parameters: a distance from a reference point moving along a first projected track to the track point, a satellite motion phase difference accumulated from the reference point moving along the first projected track to the track point, and a latitude difference accumulated from the reference point moving along the first projected track to the track point, wherein the reference point is any point on the first projected track, and the first projected track is a ground projected track of any ground co-track satellite chain.

17. The method according to any one of claims 14 to 16, wherein the method further comprises:
sending, by the ground device, a destination address change message, wherein the destination address change message is triggered based on a change of a track segment on the projected track of the current access satellite, or is triggered based on a change of the ground co-track satellite chain to which the current access satellite belongs.

18. The method according to any one of claims 14 to 17, wherein the ground device is a terminal or a ground station.

19. The method according to any one of claims 14 to 18, wherein the satellites in the ground co-track satellite chain have a same inclination angle and are located on discrete orbits.

20. A communication apparatus, comprising:

a transceiver unit, configured to obtain a destination address of a ground device, wherein the destination address is determined based on a ground projected track of a current access satellite of the ground device, the current access satellite is a satellite on a ground co-track satellite chain, and the ground co-track satellite chain comprises a plurality of satellites that have a same ground projected track; and
a processing unit, configured to send data to the ground device based on a communication apparatus parameter and the destination address, wherein the communication apparatus parameter comprises at least one of the following: an address of the communication apparatus, information about an inter-satellite link of the communication apparatus, and whether the communication apparatus directly communicates with the ground device.

21. The apparatus according to claim 20, wherein the destination address indicates a track point closest to the ground device on the ground projected track of the current access satellite or a point in a neighborhood range of the track point; or the destination address indicates a track segment closest to the ground device on the ground projected track of the current access satellite or a track segment in a neighborhood range of the track segment.

22. The apparatus according to claim 20 or 21, wherein the address of the communication apparatus indicates a track point of the communication apparatus on a ground projected track or a point in a neighborhood range of the track point; or the address of the communication apparatus indicates a track segment of the communication apparatus on a ground projected track or a track segment in a neighborhood range of the track segment.

23. The apparatus according to claim 21 or 22, wherein the track point is indicated by using one of the following parameters:
a distance from a reference point moving along a first projected track to the track point, a satellite motion phase difference accumulated from the reference point moving along the first projected track to the track point, and a latitude difference accumulated from the reference point moving along the first projected track to the track point, wherein the reference point is any point on the first projected track, and the first projected track is a ground projected track of any ground co-track satellite chain.

24. The apparatus according to any one of claims 20 to 23, wherein when the communication apparatus directly communicates with the ground device, the processing unit is configured to:
send the data to the ground device through a satellite-to-ground link.

25. The apparatus according to any one of claims 20 to 23, wherein when the communication apparatus determines that the communication apparatus does not directly communicate with the ground device, and a distance between the communication apparatus and the destination address is the shortest or is less than a distance threshold, the processing unit is configured to:
send the data to a satellite adjacent to the communication apparatus on the ground projected track, wherein the data is routed to the access satellite of the ground device in a route threshold range.

26. The apparatus according to claim 25, wherein a route threshold comprises at least one of the following parameters:
a route hop count threshold and a route path length threshold.

27. The apparatus according to any one of claims 20 to 23, wherein when the communication apparatus determines that the communication apparatus does not directly communicate with the ground device, and a distance between the communication apparatus and the destination address is not the shortest or is greater than a distance threshold, the processing unit is configured to:

select a next-hop satellite from the inter-satellite link according to a routing rule and the information about the inter-satellite link of the communication apparatus, wherein the routing rule comprises: using a satellite that is on the inter-satellite link and that is closest to the destination address as the next-hop satellite; and
sending, by the communication apparatus, the data to the next-hop satellite.

28. The apparatus according to any one of claims 20 to 27, wherein the transceiver unit is further configured to:
receive a destination address change message, wherein the destination address change message is triggered based on a change of a track segment on the projected track of the current access satellite, or is triggered based on a change of the ground co-track satellite chain to which the current access satellite belongs.

29. The apparatus according to any one of claims 20 to 28, wherein the ground device is a terminal or a ground station.

30. The apparatus according to any one of claims 20 to 29, wherein the address of the communication apparatus is determined based on at least one of the following parameters:
a longitude and latitude location of the communication apparatus, an ephemeris of the communication apparatus, and a communication apparatus number of the communication apparatus.

31. The apparatus according to any one of claims 20 to 30, wherein the transceiver unit is specifically configured to:

receive, for the communication apparatus, the destination address of the ground device;
when the communication apparatus is the current access satellite, determine, for the communication apparatus, the destination address of the ground device through calculation based on a location of the ground device and the ground projected track of the communication apparatus; or
receive, for the communication apparatus, another address of the ground device, wherein there is a mapping relationship between the another address and the destination address.

32. The apparatus according to any one of claims 20 to 31, wherein the satellites in the ground co-track satellite chain have a same inclination angle and are located on discrete orbits.

33. A communication apparatus, comprising:

a processing unit, configured to determine a destination address of the communication apparatus, wherein the destination address is determined based on a ground projected track of a current access satellite of the communication apparatus, the current access satellite is a satellite on a ground co-track satellite chain, and the ground co-track satellite chain comprises a plurality of satellites that have a same ground projected track; and
a transceiver unit, configured to send the destination address.

34. The apparatus according to claim 33, wherein the destination address indicates a track point closest to the communication apparatus on the ground projected track of the current access satellite or a point in a neighborhood range of the track point; or the destination address indicates a track segment closest to the communication apparatus on the ground projected track of the current access satellite or a track segment in a neighborhood range of the track segment.

35. The apparatus according to claim 34, wherein the track point is indicated by using one of the following parameters: a distance from a reference point moving along a first projected track to the track point, a satellite motion phase difference accumulated from the reference point moving along the first projected track to the track point, and a latitude difference accumulated from the reference point moving along the first projected track to the track point, wherein the reference point is any point on the first projected track, and the first projected track is a ground projected track of any ground co-track satellite chain.

36. The apparatus according to any one of claims 33 to 35, wherein the transceiver unit is further configured to: send a destination address change message, wherein the destination address change message is triggered based on a change of a track segment on the projected track of the current access satellite, or is triggered based on a change of the ground co-track satellite chain to which the current access satellite belongs.

37. The apparatus according to any one of claims 33 to 36, wherein the communication apparatus is a terminal or a ground station.

38. The apparatus according to any one of claims 33 to 37, wherein the satellites in the ground co-track satellite chain have a same inclination angle and are located on discrete orbits.

39. A communication apparatus, comprising at least one processor, wherein the processor is coupled to a memory; and the at least one processor is configured to execute a computer program or instructions stored in the memory, to perform the method according to any one of claims 1 to 13 or any one of claims 14 to 19.

40. A computer-readable storage medium, wherein the computer-readable storage medium stores instructions; and when the instructions are executed by a computer, the method according to any one of claims 1 to 13 or any one of claims 14 to 19 is performed.

41. A computer program product comprising a computer program or instructions, wherein when the computer program product runs on a computer, the method according to any one of claims 1 to 13 or any one of claims 14 to 19 is performed.

Communication system 100

Network device 110

Terminal device 101

Terminal device 102

Terminal device 103

Terminal device 104

Terminal device 105

Terminal device 106

FIG. 1

FIG. 2

FIG. 3

Track 1

Satellite 3

Satellite 2

Satellite
1

Earth

FIG. 4A

— · — · ▶ Orbit line

┄┄┄┄▶ Ground track

──────▶ Earth-centered inertial frame
satellite movement direction

Moment t1
Satellite S1

Moment t2
Satellite S2

I

I

UE

δAoL

Moment t1

Satellite S2

δRAAN

FIG. 4B

Ground co-track constellation

Inter-satellite
link

Service
link

Feeder
link

Core
network

Terminal

Gateway station

FIG. 5

First satellite

Another satellite and
network device

Step 601: The first satellite obtains a destination
address of a ground device

Step 601a: The first satellite receives the
destination address of the ground device

Step 601b: When the first satellite is a current access satellite, the
first satellite determines the destination address of the ground
device through calculation based on a location of the ground
device and a ground projected track of the first satellite

Step 601c: The first satellite receives another
address of the ground device, where there is a
mapping relationship between the another address
and the destination address

Step 602: The first satellite sends data to the ground device based
on a first satellite parameter and the destination address, where
the first satellite parameter includes at least one of the following:
an address of the first satellite, information about an inter-
satellite link of the first satellite, and whether the first satellite
directly communicates with the ground device

FIG. 6

FIG. 7

FIG. 8

FIG. 9

FIG. 10

Communication
apparatus 1100

Transceiver unit
1102

Processing unit
1101

FIG. 11

Communication apparatus 1200

Transceiver
1230

Processor
1210

Memory
1220

FIG. 12

Communication apparatus 1300

Interface circuit
1310

Logic circuit
1320

FIG. 13

## INTERNATIONAL SEARCH REPORT

| | International application No. |
|---|---|
| | **PCT/CN2023/097607** |

**A. CLASSIFICATION OF SUBJECT MATTER**

H04W 40/24(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXTC, DWPI, VEN, 3GPP: 接入, 卫星, 路由, 网络, 地址, 目的, 投影, 轨迹, 星间链路, 直接通信, 地面, 共轨集, 卫星链, 近, 轨迹点, 轨迹段, satellite, address+, route, segment, track, access, project+, destination, segment, close+, range, sphere

**C. DOCUMENTS CONSIDERED TO BE RELEVANT**

| Category* | Citation of document, with indication, where appropriate, of the relevant passages | Relevant to claim No. |
|---|---|---|
| A | CN 113329409 A (TSINGHUA UNIVERSITY) 31 August 2021 (2021-08-31) description, paragraphs 10-14 | 1-41 |
| A | CN 107450578 A (AIR FORCE ENGINEERING UNIVERSITY OF PLA) 08 December 2017 (2017-12-08) entire document | 1-41 |
| A | US 2010283681 A1 (REMONDI, Benjamin William et al.) 11 November 2010 (2010-11-11) entire document | 1-41 |
| A | ZTE. "Discussion on additional enhancement for NTN" *3GPP TSG RAN WG1 #103-e R1-2008853*, 13 November 2020 (2020-11-13), entire document | 1-41 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 August 2023** | **23 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/097607**

| Patent document cited in search report | | | Publication date (day/month/year) | Patent family member(s) | Publication date (day/month/year) |
|---|---|---|---|---|---|
| CN | 113329409 | A | 31 August 2021 | None | |
| CN | 107450578 | A | 08 December 2017 | None | |
| US | 2010283681 | A1 | 11 November 2010 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210674591